Europäisches Patentamt

European Patent Office

Office européen des brevets

(11) Veröffentlichungsnummer : **0 340 616 B1**

# (12) EUROPÄISCHE PATENTSCHRIFT

(45) Veröffentlichungstag der Patentschrift :
22.07.92 Patentblatt 92/30

(51) Int. Cl.⁵ : **C02F 1/04,** B01D 1/00, F23G 7/00

(21) Anmeldenummer : **89107536.8**

(22) Anmeldetag : **26.04.89**

(54) **Vorrichtung zur Aufarbeitung industrieller Abwässer, die umweltschädliche Verunreinigungen und Schadstoffe enthalten.**

(30) Priorität : **06.05.88 DE 3815503**

(43) Veröffentlichungstag der Anmeldung :
**08.11.89 Patentblatt 89/45**

(45) Bekanntmachung des Hinweises auf die Patenterteilung :
**22.07.92 Patentblatt 92/30**

(84) Benannte Vertragsstaaten :
**AT BE CH FR GB IT LI NL**

(56) Entgegenhaltungen :
**DE-A- 1 696 131**
**DE-A- 3 718 595**
**FR-A- 2 354 974**
**US-A- 3 864 252**
**US-A- 4 666 587**

(56) Entgegenhaltungen :
**CHEMICAL ABSTRACTS, Band 80, Nr. 8, 25. Februar 1974, Seite 248, Nr. 40758m, Columbus, Ohio, US; Y.V. FILATOV et al.:"Development of a purification process for waste waters from Nitron fiber production using sodium sulfate"**

(73) Patentinhaber : **Miljoevern Umwelt-Technik GmbH**
**Bredenscheider Strasse 89**
**W-4320 Hattingen (DE)**
Patentinhaber : **Schade, Horst Dipl.-Ing.**
**In der Marpe 16**
**W-4320 Hattingen (DE)**

(72) Erfinder : **Schade, Horst, Dipl.-Ing.**
**In der Marpe 16**
**W-4320 Hattingen (DE)**

(74) Vertreter : **Finkener und Ernesti Patentanwälte**
**Heinrich-König-Strasse 119**
**W-4630 Bochum 1 (DE)**

## Beschreibung

Die Erfindung betrifft eine Vorrichtung zur Aufarbeitung von in wässriger Phase anfallenden Bädern oder Spülwässern, die umweltschädliche Verunreinigungen und Schadstoffe enthalten und bei industriellen Prozessen anfallen, bestehend aus einem Vorratsbehälter für das zu verarbeitende Abwasser und einer Verdampfungseinrichtung mit einer indirekt beheizten Verdampfungskammer.

Aus der DE-PS 16 96 131 ist ein Verfahren zum Aufbereiten von Spül-Abwässern aus Salzbad-Härtereien bekannt, bei dem eine Spülwassersole in einem indirekt beheizten Verdampferofen kontinuierlich zu einer flüssigen Salzschmelze eingedampft wird, wobei eine Trennung von niedrig- und hochschmelzenden Härtesalzen erzielt wird und das niedrigschmelzende Gemisch abgezogen wird. Bei der bekannten Anlage werden die bei der Verdampfung entstehenden gasförmigen Bestandteile, deren Verunreinigung oberhalb der geltenden Vorschriften liegt, in die Atmosphäre abgelassen.

In der Literaturstelle Chem. Abstr. Bd. 80, Nr. 8, 25. 02. 1974, S. 248, Nr. 40758m. wird ein Verfahren zur Reinigung von Abwässern beschrieben, die bei einem bestimmten Prozeß anfallen und in der Hauptsache Schwefelsäure bzw. Natriumsulfat enthalten. Soweit sich der Kurzfassung entnehmen läßt, wird das Abwasser durch Zugabe von Natriumkarbonat neutralisiert und anschließend in einer Verdampfungsanlage verdampft. Die während der Neutralisation und der Verdampfung entstehenden Gase werden dem Heizofen des Verdampfers zugeführt und in diesem zusammen mit dem Brenngas verbrannt. Es handelt sich dabei offenbar um eine Verfahrensweise, die auf dem gleichen Prinzip beruht wie beispielsweise das aus der DE-OS 27 26 302 bekannte Verfahren, bei dem ebenfalls eine Verdampfereinrichtung benutzt wird, der in üblicher Weise die Verbrennungswärme einer Verbrennungsvorrichtung über eine Wärmeträgerleitung zugeführt wird. Dabei ist ebenfalls vorgesehen, bestimmte Verunreinigungen in der Brenneinrichtung zu verbrennen, in der der Wärmeträger für die Verdampfereinrichtung erzeugt wird. Die erwähnte Kurzfassung geht über den allgemeinen Hinweis, die bei der Verdampfung in einem Verdampfer entstehenden Gase in der zu dem Verdampfer gehörenden Heizeinrichtung zu verbrennen, nicht hinaus.

Der Erfindung liegt die Aufgabe zugrunde, aus industriellen Abwässern umweltschädliche Verunreinigungen und Schadstoff mit geringerem Aufwand so zu entfernen, daß möglichst viele Einzelelemente wieder in den Prozeß zurückgeführt werden können oder falls dies nicht möglich ist so umgesetzt werden, daß keine die Umwelt schädigenden Immissionen anfallen.

Ausgehend von einer Vorrichtung der eingangs beschriebenen Art besteht die Erfindung darin, daß die Verdampfungskammer von einem durch einen Brenner beheizten Brennraum umgeben ist, daß der Verdampfungskammer ein Abscheider nachgeschaltet ist, über den die die Verdampfungskammer verlassenden Gase nach Abscheidung von mitgerissener Feuchtigkeit in einen getrennt angeordneten Zufuhrkanal gelangen, der in der'Nähe der Brennerleitung in den Brennraum mündet und daß die Verdampfungskammer mit einem überlauf für die anfallende Schmelze versehen ist, der oberhalb eines Aufnahmebehälters angeordnet ist.

Die Erfindung sieht ferner vor, die obere Öffnung des Aufnahmebehälters mit einer den überlauf abdeckenden Haube zu versehen, durch die ein mit der Atmosphäre in Verbindung stehender Raum gebildet wird, der zum Absaugen der gasförmigen Phase über eine Leitung und einen Ventilator mit der zum Abscheider führenden Leitung in Verbindung steht. Vorzugsweise wird als Abscheider ein Mehrfach-Platten-Abscheider benutzt.

Eine bevorzugte Ausführungsform der Erfindung sieht vor, daß in die den Abscheider mit dem Zufuhrkanal verbindende Leitung ein Brennerrohr mündet, an dessen Ende mittels einer Anlage bekannter Bauart ein Lichtbogen erzeugt wird, in dem die Abgase, bevor sie in den Brennraum eingeleitet werden, einer Nachverbrennung unterworfen werden. Dabei ist erfindungsgemäß der Zufuhrkanal zweckmäßigerweise so angeordnet, daß er an der Eintrittsstelle in den Brennraum um eine Höhe (Y) tiefer liegt als die Brennerleitung, um einen Abstand (X) zu der Brennerleitung seitlich versetzt ist und zur Waagerechten in einem Winkel ($\alpha$) schräg nach oben verläuft. Die Höhe (Y) liegt vorzugsweise zwischen 200 und 250 mm, der Abstand (X) zwischen 75 und 100 mm und der Winkel ($\alpha$) zwischen 10 und 15°.

Mit der erfindungsgemäßen Vorrichtung gelingt es, die in den industriellen Abwässern enthaltenen Salze sauber zurückzugewinnen, so daß sie wieder in den Produktionsprozeß zurückgeführt werden können und eine chemische Entgiftung mit den damit verbundenen Nachteilen, wie hohe Chemikalienkosten, Lagerungs- und Entsorgungsprobleme vollständig entfallen kann. Die Brennertemperatur liegt zwischen 1200 und 2000° C und kann durch Zugabe von Sauerstoff in diesem Bereich verändert werden, um sie der Art der zu vernichtenden schädlichen Bestandteile anzupassen. Die Rauchgase, die in die Atmosphäre abgeleitet werden, sind frei von umweltschädigenden Verunreinigungen.

Falls Abwässer mit niedrig siedenden Einzelkomponenten, wie $NH_4^+$, $CN^-$ und Hg anfallen, besteht selbstverständlich die Möglichkeit, einen alkalischen Wäscher, der bei einem pH-Wert von 7 bis 9,5 arbeitet nachzuschalten, um die nach der Oxidation in der Nachverbrennung entstehende Säure auszuwaschen udn die niedrig siedenden Metalle abzuscheiden. Wenn in dem Abwasser Schwermetalle enthalten sein sollten, kann das Abwasser in bekannter Weise einer speziellen Schwermetallentfernung zugeführt werden.

Auf der Zeichnung ist ein Ausführungsbeispiel der Erfindung schematisch dargestellt. Es zeigen:

Fig. 1 eine Seitenansicht einer Anlage zur Durchführung des Verfahrens und

Fig. 2 eine teilweise geschnittene Vorderansicht

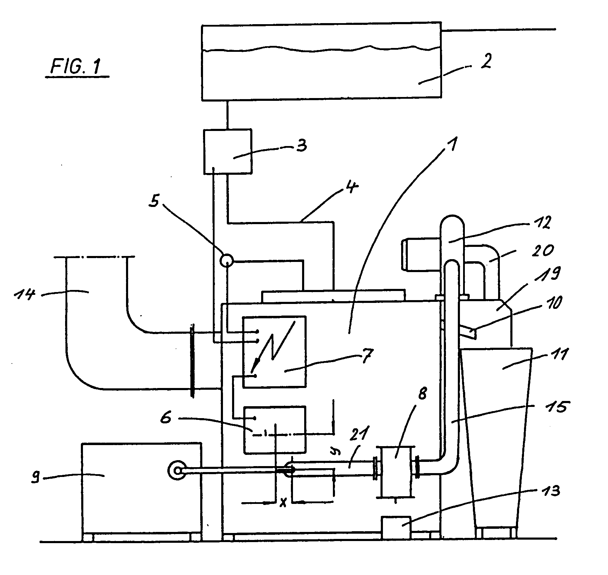

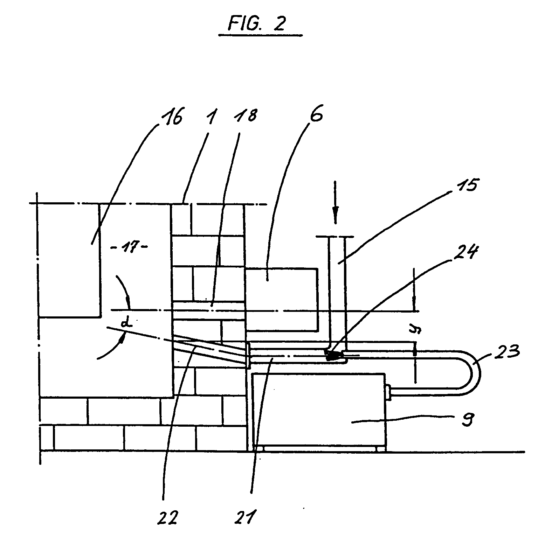

Mit (2) ist ein Vorratsbehälter für das zu verarbeitende Abwasser bezeichnet, das mit einer Dosierpumpe (3) über die Leitung (4) in die indirekt beheizte Verdampfungskammer (16) der Verdampfungseinrichtung (1) eingeleitet wird. Wie sich aus Fig. 2 ergibt, ist die Verdampfungskammer (16) von einem Brennraum (17), der über den Brenner (6) und die Brennerleitung (18) beheizt wird, umgeben. Zur indirekten Beheizung des Verdampfungsraumes kann auch die Abwärme anderer Öfen entweder ausschließlich oder zusätzlich nutzbar gemacht werden. An die Brennkammer ist ein Rauchgasrohr (14) (Fig. 1) angeschlossen, über das die Rauchgase in die Atmosphäre abgelassen werden. Über den Temperaturmesser (5) wird der Brenner (6) so gesteuert, daß er bei Erreichen der für den Verdampfungsraum eingestellten Temperatur aus - bzw. bei Unterschreiten eingeschaltet wird. Die Temperatur wird so eingestellt, daß sie über dem Siedepunkt der flüssigen Komponente des Abwassers und über dem Schmelzpunkt der bei der Verdampfung entstehenden festen Komponente liegt. Wenn die Verdampfungskammer mit der erschmolzenen Feststoffkomponente gefüllt ist, fließt diese über einen Überlauf (10) in einen verfahrbaren Aufnahmebehälter (11), so daß die Dosierpumpe, die gegebenenfalls über eine Steuerung abschaltbar ist, weiter Abwasser in den Verdampfungsraum fördern kann.

Die bei der Verdampfung entstehende gasförmige Komponente entweicht ebenfalls durch den Überlauf (10) und wird aus dem über dem Wagen (11) befindlichen, mit einer Haube (19) abgedeckten mit der Atmosphäre in Verbindung stehenden Raum zusammen mit Luft über die Leitung (20) mittels eines Ventilators (12) abgesaugt und über das Abluftrohr (15) durch einen Abscheider (8) bekannter Bauart gedrückt, um mitgerissene Flüssigkeit aus dem Gasstrom zu entfernen. Zweckmäßigerweise ist der Abscheider (8) ein Mehrflächen-Prallabscheider. Die abgeschiedene Flüssigkeit tropft in einen Kondensat-Auffangbehälter (13) und wird von dort zur nochmaligen Verdampfung wieder in den Vorratsbehälter (2) zurückgeführt.

Das aus dem Abscheider austretende Gas wird über die Leitung (21) in den Brennraum (17) eingeblasen. Die Zufuhr erfolgt über einen Zufuhrkanal (22), der an der Eintrittsstelle in den Brennraum um die Höhe (Y) tiefer liegt als die Brennerleitung (18), um einen Abstand (X) zu der Brennerleitung seitlich versetzt angeordnet ist und zur Waagerechten in einem Winkel ($\alpha$) schräg nach oben verläuft. Die Höhe (Y) beträgt etwa 230 mm, der Abstand (X) etwa 85 mm und der Winkel $\alpha$ etwa 12°.

Wenn die normale Brennertemperatur zum Verbrennen der in den Abgasen vorhandenen Schadstoffe nicht ausreicht, was zum Beispiel der Fall sein kann, wenn die Abluft organische Cl-Verbindungen oder andere organische toxische Verbindungen enthält, wird die aus dem Abscheider (8) austretende Abluft in einem Lichtbogen einer Nachverbrennung unterworfen, bevor sie in den Brennraum eingeleitet wird. Bei der Nachverbrennung werden die toxischen Verbindungen in ihre Einzelelemente ($H_2$, C, $N_2$) zerlegt. Der Lichtbogen (24) wird in dem zwischen dem Abscheider (8) und dem Zufuhrkanal (22) liegenden Leitungsabschnitt (21) am Ende eines Brennerrohres (23) mittels einer Anlage (9) bekannter Bauart erzeugt.

Die Steuerung der Anlage erfolgt in an sich bekannter Weise über nicht näher erläuterte Steuerleitungen, die in einem Schaltkasten (7) zusammengefaßt sind.

Die erfindungsgemäße Anlage kann sowohl zur Beseitigung umweltschädlicher Verunreinigungen und Schadstoffe aus industriellen Abwässern, z.B. aus Abwässern, die in Salzbad-Härtereien anfallen als auch zur Verringerung des Volumens von nach längerem Gebrauch verschmutzten Bädern oder Spülwässern eingesetzt werden, wie sie beispielsweise bei Anlagen zur Oberflächenbehandlung anfallen. In diesem Fall werden die Abwässer nach entsprechender chemischer Vorbehandlung in der Verdampfungskammer eingedampft, bis eine Verringerung des Volumens im Verhältnis von etwa 8 : 1 erreicht ist. Das eingedickte Kondensat kann unter erheblich günstigeren verfahrenstechnischen und wirtschaftlichen Bedingungen entsorgt werden als die ursprüngliche Lösung.

**Patentansprüche**

1. Vorrichtung zur Aufarbeitung von in wässriger Phase anfallenden Bädern oder Spülwässern, die umweltschädliche Verunreinigungen und Schadstoffe enthalten und bei industriellen Prozessen anfallen, bestehend aus einem Vorratsbehälter für das zu verarbeitende Abwasser und einer Verdampfungseinrichtung mit einer indirekt beheizten Verdampfungskammer, dadurch gekennzeichnet, daß die Verdampfungskammer (16) von einem durch einen Brenner (16) beheizten Brennraum (17) umgeben ist, daß der Verdampfungskammer ein Abscheider (8) nachgeschaltet ist, über den die die Verdampfungskammer verlassenden Gase nach Abscheidung von mitgerissener Feuchtigkeit in einen getrennt angeordneten Zufuhrkanal (22) gelangen, der in der Nähe der Brennerleitung (18) in den Brennraum (17) mündet und daß die Verdampfungskammer (16) mit einem Überlauf (10) für die anfallende Schmelze versehen ist, der oberhalb eines Aufnahmebehälters (11) angeordnet ist.

2. Vorrichtung nach Anspruch 1, dadurch gekennzeichnet, daß die obere Öffnung des Aufnahmebehälters (11) mit einer den Überlauf (10) abdeckenden Haube (19) versehen ist, durch die ein mit der Atmosphäre in Verbindung stehender Raum gebildet wird, der zum Absaugen der gasförmigen Phase über eine Leitung (20) und einen Ventilator (12) mit der zum Abscheider (8) führenden Leitung (15) in Verbindung steht.

3. Vorrichtung nach den Ansprüchen 1 und 2, dadurch gekennzeichnet, daß der Abscheider (8) ein Mehrfach-Platten-Abscheider ist.

4. Vorrichtung nach einem der Ansprüche 1 bis 3, dadurch gekennzeichnet, daß in die den Abscheider (8) mit dem Zufuhrkanal (22) verbindende Leitung (21) ein Brennerrohr (23) mündet, an dessen Ende mittels einer Anlage (9) bekannter Bauart ein Lichtbogen (24) erzeugt wird, in dem die Abgase, bevor sie in den Brennraum eingeleitet werden, einer Nachverbrennung unterworfen werden.

5. Vorrichtung nach einem der Ansprüche 1 bis 4, dadurch gekennzeichnet, daß der Zufuhrkanal (22) so angeordnet ist, daß er an der Eintrittsstelle in den Brennraum um eine Höhe (Y) tiefer Liegt als die Brennerleitung (18), um einen Abstand (X) zu der Brennerleitung seitlich versetzt ist und zur Waagerechten in einem Winkel (α) schräg nach oben verläuft.

6. Vorrichtung nach Anspruch 5, dadurch gekennzeichnet, daß die Höhe (Y) vorzugsweise zwischen 200 und 250 mm, der Abstand (X) zwischen 75 und 100 mm und der Winkel (α) zwischen 10° und 15° Liegt.


## Claims

1. Apparatus for the treatment of baths or wash waters in the aqueous phase containing environmentally noxious pollutants and toxic substances, and occurring in industrial processes, comprising a reservoir for the waste water for treatment and an evaporating means having an indirectly heated evaporating chamber, characerised in that the evaporating chamber (16) is surrounded by a combustion chamber (17) heated by a burner (16), in that the evaporating chamber is followed by a separator (8) via which the gases leaving the evaporating chamber enter a separate feed duct (22) after the separation of entrained moisture, said feed duct (22) leading into the combustion chamber (17) near the burner conduit (18) and in that the evaporating chamber (16) is provided with an overflow (10) for the melt produced, said overflow being disposed above a reception tank (11).

2. Apparatus according to claim 1, characterised in that the upper opening of the reception tank (11) is provided with a hood (19) which covers the overflow (10) and which forms a chamber which communicates with atmosphere and which, for the purpose of extraction of the gaseous phase, communicates via a conduit (20) and a fan (12) with the conduit (15) leading to the separator (8).

3. Apparatus according to claims 1 and 2, characterised in that the separator (8) is a multi-plate separator.

4. Apparatus according to any one of claims 1 to 3, characterised in that a burner tube (23) leads into the conduit (21) connecting the separator (8) to the feed duct (22), an installation (9) of known type generating an arc (24) at the end of the burmer tube (23), in which arc the waste gases are subjected to a post-combustion before being introduced into the combustion chamber.

5. Apparatus according to any one of claims 1 to 4, characterised in that the feed duct (22) is so disposed that at the point of entry into the combustion chamber it is lower than the burner conduit (18) by a height (Y), is laterally offset from the burner conduit by a distance (X) and extends obliquely upward to the horizontal at an angle (α).

6. Apparatus according to claim 5, characterised in that the height (Y) is preferably between 200 and 250 mm, the distance (X) is between 75 and 100 mm and the angle (α) is between 10° and 15°.


## Revendications

1. Installation pour le traitement de bains ou d'eaux de rinçage produits dans la phase aqueuse qui contiennent des polluants nuisibles pour l'environnement et des matières toxiques et qui sont produits lors de processus ou procédés industriels, constituée par un réservoir de stockage gour l'eau usée à traiter et un dispositif d'évaporation conportant une chambre d'évaporation chauffée par vole indirecte, caractérisée en ce que la chambre d'évaporation 16 est entourée d'une chambre de combustion 17 chauffée par un bruleur, en ce qu'un séparateur 8 est implanté en aval de la chambre d'évaporation, séparateur par lequel les gaz quittant le chambre d'évaporation agrès séparation de l'humidité entrainée parviennent dans un canal d'amenée 22 agencé de façon séparée, canal d'amenée qui débouche à proximité de la conduite des brûleurs 18 dans la chambre de conbustion 17, et en ce que la chambre d'évaporation 16 est munie d'un trop-plein 10 pour la fusion qui se produit, trop-plein qui est disposé au-dessus d'un récipient de recueil 11.

2. Installation selon la revendication 1, caractérisée en ce que l'ouverture supérieure du récipient de recueil 11 est munie d'un capuchon 19 recouvrant le trop-plein 10, à travers laquelle est formée une zone en communication avec l'atmosphère qui est en communication, pour l'aspiration de la phase gazeuse, par une conduite 20, et un ventilateur 12, avec la conduite 15 menant au séparateur 8.

3. Installation selon les revendications 1 et 2, caractérisée en ce que le séparateur 8 est un séparateur à plaques multiples.

4. Installation selon l'une des revendication 1 à 3, caractérisée en ce qu'un tube de brûleur 23 débouche dans la conduite 21 reliant le séparateur 8 avec le canal d'amenée 22, sur l'extrémité duquel, au moyen d'une installation neutre de type connu est produit un arc électrique 24 dans lequel les gaz d'échappement sont soumis à une post-combustion avant d'être introduits dans la chambre des brûleurs.

5. Installation selon l'une des revendications 1 à 4, caractérisée en ce que le canal d'amenée 22 est agencé de telle manière que sur l'entrée dans la chambre de combustion, il se situe à concurrence d'une hauteur (Y) plus basse que la conduite des brûleurs 18, en ce qu'il est décalé latéralement d'une distance X par rapport à la conduite des brûleurs et en ce qu'il s'étend par rapport à l'horizontale selon un angle ($\alpha$) obliquement vers le haut.

6. Installation selon la revendication 5, caractérisée en ce que la hauteur (Y) se situe de préférence entre 200 et 250 millimètres, la distance X entre 75 et 100 millimètres, et l'angle $\alpha$ entre 10° et 15°.

_FIG. 1_

FIG. 2